# EUROPEAN PATENT APPLICATION

(11) **EP 4 703 691 A1**
(43) Date of publication of application: **04.03.2026**
(21) Application number: 25198213.8
(22) Date of filing: 26.08.2025
(51) Int. Cl.: G01F 1/66, G01F 1/667, G01F 15/00

(54) **NOISE ATTENUATING CONDUIT**

(30) Priority: 27.08.2024 US 202418816345
(71) Applicant: Sensia Netherlands B.V., 3065 WB Rotterdam (NL)
(72) Inventor: BROWN, Gregor James, Ayrshire (GB)
(74) Representative: Gill Jennings & Every LLP

(57) **Abstract**

A flow meter includes a conduit, and ultrasonic transducers. In some embodiments, the conduit includes a sidewall, an inner volume through which a fluid flows defined by the sidewall, and recesses. In some embodiments, each of the ultrasonic transducers is positioned in a corresponding one of the recesses. In some embodiments, the sidewall defines geometric structures configured to mitigate a transfer of energy through the sidewall.

## Description

### CROSS REFERENCE

This application claims the benefit of and the priority to U.S. Patent Application No. 18/816345, filed August 27, 2024, the entire disclosure of which is incorporated by reference herein.

### BACKGROUND

The present disclosure relates to conduits. More specifically, the present disclosure relates to conduits for flow meters.

### SUMMARY

One implementation of the present disclosure relates to a flow meter, according to some embodiments. In some embodiments, the flow meter includes a conduit and multiple transducers. The conduit includes a sidewall, an inner volume through which a fluid flows defined by the sidewall, and multiple recesses or ports. The ultrasonic transducers are positioned in corresponding ones of the recesses or ports. The sidewall defines multiple geometric structures. The geometric structures are configured to mitigate a coherent transfer of acoustic energy through the sidewall.

In some embodiments, the flow meter further includes a controller configured to receive signals from the ultrasonic transducers and estimate a flow rate of the fluid. In some embodiments, the geometric structures alter acoustic properties of a path between the ultrasonic transducers through the sidewall to mitigate the coherent transfer of acoustic energy through the sidewall and reduce an amount of noise measured at the ultrasonic transducers. In some embodiments, the geometric structures are configured to inhibit the coherent transfer of acoustic energy through the sidewall by a combination of at least one or more of reflection, resonance, or interference.

In some embodiments, the geometric structures each include an apex and a base. In some embodiments, the geometric structures are configured to receive at least a portion of the acoustic energy that is transferred through the sidewall and transfer the acoustic energy to the geometric structures to mitigate the coherent transfer of acoustic energy through the sidewall and reduce an amount of noise measured at the ultrasonic transducers.

In some embodiments, the flow meter includes a dampening material positioned about an exterior surface of the sidewall of the conduit. The dampening material is configured to receive and absorb acoustic energy transferred through a structure of the sidewall and reduce an amount of noise measured at the plurality of ultrasonic transducers.

In some embodiments, the geometric structures protrude outwards from an outer surface of the sidewall. In some embodiments, the geometric structures are positioned along the conduit between a first of the ultrasonic transducers and a second of the ultrasonic transducers.

Another implementation of the present disclosure relates to a flow meter, according to some embodiments. In some embodiments, the flow meter includes a conduit and multiple ultrasonic transducers. In some embodiments, the conduit includes a sidewall, an inner volume through which a fluid flows defined by the sidewall, and multiple recesses or ports. In some embodiments, each of the ultrasonic transducers are positioned in a corresponding one of the recesses or ports. The ultrasonic transducers and corresponding transducer housings may be recessed (e.g., positioned on an outside of the conduit) or positioned in a port such that the ultrasonic transducer protrudes into the conduit. In some embodiments, the sidewall defines multiple geometric structures. The geometric structures include an apex and a base, according to some embodiments. In some embodiments, the geometric structures are configured to mitigate a coherent transfer of acoustic energy through the sidewall to the ultrasonic transducers to improve a signal to noise ratio of signals received by the ultrasonic transducers.

In some embodiments, the flow meter further includes a controller. The controller is configured to receive signals from the plurality of ultrasonic transducers and estimate a flow rate of the fluid, according to some embodiments.

In some embodiments, the geometric structures alter acoustic properties of a path between the ultrasonic transducers through the sidewall to mitigate the coherent transfer of acoustic energy through the sidewall and reduce an amount of noise measured at the ultrasonic transducers. In some embodiments, the geometric structures are configured to receive at least a portion of the acoustic energy that is transferred through the sidewall and transfer the acoustic energy to the geometric structures to mitigate the coherent transfer of acoustic energy through the sidewall and reduce an amount of noise measured at the ultrasonic transducers.

In some embodiments, the flow meter further includes a dampening material positioned about an exterior surface of the sidewall of the conduit. In some embodiments, the dampening material is configured to absorb acoustic energy transferred through structures of the sidewall and further reduce an amount of noise measured at the ultrasonic transducers.

In some embodiments, the geometric structures protrude outwards from an outer surface of the sidewall. In some embodiments, the geometric structures are positioned along the conduit between a first of the ultrasonic transducers and a second of the ultrasonic transducers.

Another implementation of the present disclosure is a flow meter, according to some embodiments. In some embodiments, the flow meter includes a conduit, and an ultrasonic transducer. In some embodiments, the conduit includes a sidewall and an inner volume through which a fluid flows defined by the sidewall. In some embodiments, the ultrasonic transducer is positioned along the conduit. In some embodiments, the ultrasonic transducer is configured to measure a rate of a flow of the fluid through the conduit. In some embodiments, the sidewall defines multiple geometric structures. The geometric structures include an apex and a base, according to some embodiments. In some embodiments, the geometric structures are configured to mitigate a coherent transfer of acoustic energy through the sidewall to the ultrasonic transducers to improve a signal to noise ratio of the ultrasonic transducer.

In some embodiments, the flow meter includes a controller configured to receive signals from the ultrasonic transducer and estimate a flow rate of the fluid. In some embodiments, the geometric structures alter acoustic properties of a path between the ultrasonic transducer through the sidewall to mitigate the transfer of acoustic energy through the sidewall and reduce an amount of noise measured at the ultrasonic transducer.

In some embodiments, the geometric structures are configured to receive at least a portion of the acoustic energy that is transferred through the sidewall and transfer the acoustic energy to the geometric structures to mitigate the transfer of acoustic energy through the sidewall and reduce an amount of noise measured at the ultrasonic transducer. In some embodiments, the flow meter further includes a dampening material positioned about an exterior surface of the geometric structures at the sidewall of the conduit. In some embodiments, the dampening material is configured to absorb acoustic energy transferred through the sidewall and reduce an amount of noise measured at the ultrasonic transducer. In some embodiments, the geometric structures are positioned along the conduit at a longitudinal position across which the ultrasonic transducer emits an ultrasonic signal.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE DRAWINGS

FIG. 1 is a block diagram of an ultrasonic flow meter, according to some embodiments.
FIG. 2 is a diagram of a conduit for an ultrasonic flow meter including structure for mitigating energy transmission through a wall of the conduit, according to some embodiments.
FIG. 3A is a diagram of a portion of the structure of FIG. 2 as energy or a vibration travels through the wall of the conduit at a first position, according to some embodiments.
FIG. 3B is a diagram of the portion of the structure of FIG. 2 as energy or the vibration travels through the wall of the conduit at a second position, according to some embodiments.
FIG. 4 is a diagram of a conduit for an ultrasonic flow meter including a conduit that has a wall with a complex path to alter a transmission of acoustic energy through the wall, according to some embodiments.
FIG. 5 is a diagram of the conduit of FIG. 2 including an absorbing material positioned along an exterior surface of the structure, according to some embodiments.
FIG. 6 is a diagram of a conduit for an ultrasonic flow meter including structure of mitigating energy transmission through a wall of the conduit and an absorbing material positioned along an exterior surface of the structure, including a pair of ultrasonic transducers oriented at an angle, according to some embodiments.
FIG. 7 is a diagram of a conduit for an ultrasonic flow meter including structure of mitigating energy transmission through a wall of the conduit and an absorbing material positioned along an exterior surface of the structure, including two pair of ultrasonic transducers oriented at angles, according to some embodiments.
FIG. 8 is another diagram of the conduit of FIG. 2 including geometric structures, according to some embodiments.
FIG. 9 is another diagram of the conduit of FIG. 2 including geometric structures, according to some embodiments.
FIG. 10 is another diagram of the conduit of FIG. 2 including geometric structures within an enclosure, according to some embodiments.
FIG. 11 is a perspective view of the conduit of FIG. 2 including cuboid structures, according to some embodiments.
FIG. 12 is another perspective view of the conduit of FIG. 2 including discrete structures, according to some embodiments.
FIG. 13 is a perspective view of the conduit of FIG. 2 including a spiral structure, according to some embodiments.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

According to an exemplary embodiment, a flow meter includes a conduit through which a fluid flow. The flow meter also includes at least one pair of transducers that are configured to exchange ultrasonic signals with each other and either convert a received ultrasonic signal to a voltage or generate an ultrasonic signal for transmission upon receiving a voltage. In some embodiments, the conduit includes a sidewall that has a structure for mitigating the transfer of acoustic energy between the ultrasonic transducers through the sidewall. The structure may result in an altered acoustic transmission along a path between the ultrasonic transducers through the sidewall or may impinge vibrations in order to impede the coherent transfer of acoustic energy through the sidewall. The flow meter can also include a dampening material positioned around an exterior surface of the sidewall.

### Flow Meter System

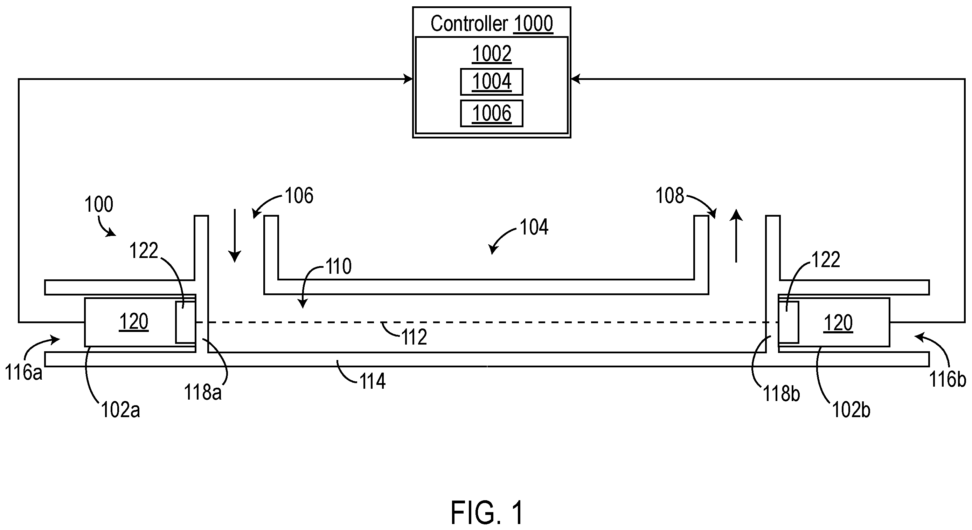

Referring particularly to FIG. 1, a flow meter system 100 includes a conduit 104 (e.g., a tubular member, a flow body, a body, a flow meter body, etc.), a first transducer 102a, and a second transducer 102b, according to some embodiments. In some embodiments, the transducers 102 are ultrasonic transducers that are disposed in recesses 116 of the conduit 104 and engage, directly contact, etc., surfaces 118. The transducers 102 and corresponding transducer housings may also be recessed (e.g., positioned on an outside of the flow conduit), or in some embodiments the transducer 102 and corresponding transducer housings may be positioned in a port such that it protrudes into the conduit 104. The conduit 104 defines an inner volume 110 (e.g., a flow path, a fluid path, a space, etc.) through which a fluid (e.g., a liquid, a gas, etc.) may flow. In some embodiments, the conduit 104 includes an inlet 106 and an outlet 108 so that fluid can enter the inner volume 110 through the inlet 106 and exit the conduit 104 through the outlet 108. In some embodiments, the first transducer 102a is positioned at a first recess 116a and the second transducer 102b is positioned at a second recess 116b (e.g., at an opposite end of the conduit 104 relative to the first transducer). In some embodiments, a first surface 118a and a second surface 118b are a partition between the first transducer 102a or the second transducer 102b and the inner volume 110. In some embodiments, the first transducer 102a emits or receives an ultrasonic signal through the first surface 118a and the second transducer 102b emits or receives an ultrasonic signal through the second surface 118b. In some embodiments, the ultrasonic signal propagates along a path 112 defined between the first transducer 102a and the second transducer 102b. In some embodiments, each transducer 102 includes a module or housing member 120 and a piezoelectric element 122 positioned within the module or housing member 120. In some embodiments, the first transducer 102a and the second transducer 102b are each configured to convert an electrical signal to an ultrasonic signal for transfer to the other transducer 102, and vice versa. The first transducer 102a and the second transducer 102b can exchange ultrasonic signals with each other and generate electrical signals or impulses in response to receiving an ultrasonic signal.

In some embodiments, the first transducer 102a and the second transducer 102b are used by a controller, a processing circuit, processing circuitry, a processor, a computer, etc., shown as controller 1000, to determine a time of flight of the ultrasonic signal in either direction (e.g., from the first transducer 102a to the second transducer 102b, or from the second transducer 102b to the first transducer 102a). In some embodiments, the time of flight (e.g., in either direction between the transducers 102) is used by the controller 1000 to determine a flow rate of the fluid in the conduit 104. The flow rate of the fluid may influence the velocity of the ultrasonic signals between the first transducer 102a and the second transducer 102b, and thereby influence the time of flight of the ultrasonic signals between the transducers 102. In this way, the time of flight can be used to determine the flow rate or velocity of the fluid flowing through the conduit 104.

The controller 1000 includes processing circuitry 1002, a processor 1004, and memory 1006. Processing circuitry 1002 can be communicably connected to the communications interface such that processing circuitry 1002 and the various components thereof can send and receive data via the communications interface. Processor 1004 can be implemented as a general purpose processor, an application specific integrated circuit (ASIC), one or more field programmable gate arrays (FPGAs), a group of processing components, or other suitable electronic processing components.

Memory 1006 (e.g., memory, memory unit, storage device, etc.) can include one or more devices (e.g., RAM, ROM, Flash memory, hard disk storage, etc.) for storing data and/or computer code for completing or facilitating the various processes, layers and modules described in the present application. Memory 1006 can be or include volatile memory or non-volatile memory. Memory 1006 can include database components, object code components, script components, or any other type of information structure for supporting the various activities and information structures described in the present application. According to some embodiments, memory 1006 is communicably connected to processor 1004 via processing circuitry 1002 and includes computer code for executing (e.g., by processing circuitry 1002 and/or processor 1004) one or more processes described herein.

Ultrasonic flow meters can suffer from insufficient signal to noise ratios due to a phenomenon that occurs when some of the energy generated by the ultrasonic transducers 102 travels between the transducers 102 along an undesirable route through materials of the meter body rather than only through the fluid of the conduit (e.g., along a structural portion of the conduit 104 shown as sidewall 114). Reducing an amount of energy that reaches the receiving one of the transducers 102 via the undesired path (e.g., through the sidewall 114) improves the signal to noise ratio of the ultrasonic signal and thereby results in improved accuracy of the calculation of the flow rate of the fluid. A portion of acoustic energy generated each time an electrical signal is applied to a transmitting one of the transducers 102 will pass through the sidewall 114. Since the speed of sound in solid materials is typically greater than in fluids, the transmission of energy through the sidewall 114 may reach the receiving one of the transducers 102 before the ultrasonic signal that is travelling through the fluid. The ultrasonic signal (e.g., vibrations, energy, etc.) that are transferred through the sidewall 114 may be classified as a noise, and consequently may limit an achievable signal to noise ratio. In turn, the signal to noise ratio may limit how accurately the transit time of the ultrasonic signal through the fluid can be determined and therefore how accurately the flow rate of the fluid can be determined.

### Flow Meter with Geometric Improvements

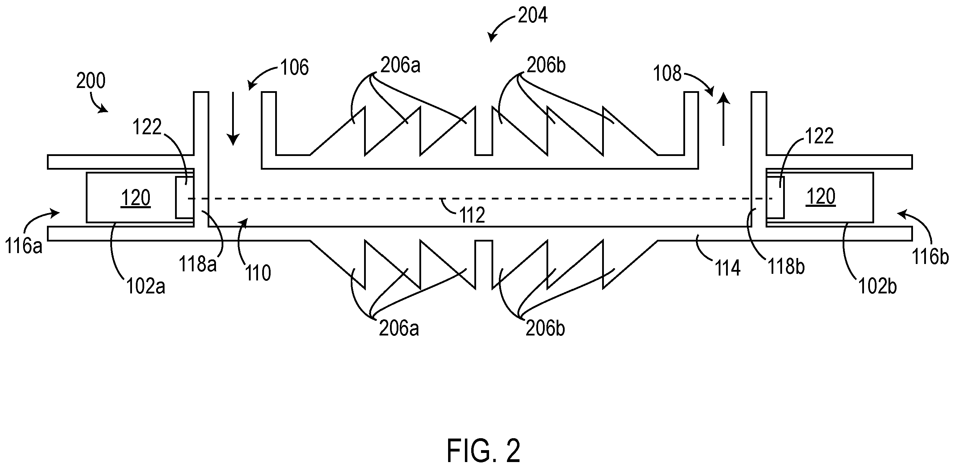

Referring to FIG. 2, the flow meter assembly 100 of FIG. 1 is shown, modified as flow meter assembly 200, is generally structurally similar to the flow meter assembly 100. As shown, a conduit 204 of the flow meter assembly 200 is similar to the conduit 104 of FIG. 1 but includes a plurality of geometric features, shown as protrusions 206 that extend from an exterior surface of the sidewall 114 of the conduit 204. The protrusions 206 may each have a cross-sectional shape of a right triangle as shown in FIG. 2, but may be of a different cross-section, with one axis extending in a direction generally or substantially perpendicular or radially outwards from a longitudinal axis of the conduit 204. The protrusions 206 may extend annularly along the exterior surface of the sidewall 114. In some embodiments, the protrusions 206 are configured to reduce or absorb an amount of ultrasonic signal or vibration that is transferred from an emitting or transmitting one of the transducers 102 and a receiving one of the transducers 102. In some embodiments, the conduit 204 includes a first set of annular protrusions 206a, and a second set of annular protrusions 206b that have opposite orientations along the conduit 204. In some embodiments, the first set of annular protrusions 206a are configured to mitigate or reduce an amount or degree of ultrasonic signals that are transferred from the first transducer 102a (e.g., the transmitting transducer) to the second transducer 102b (e.g., the receiving transducer). Similarly, the second set of annular protrusions 206b are configured to mitigate or reduce an amount or degree of ultrasonic signals that are transferred from the second transducer 102b (e.g., the transmitting transducer) to the first transducer 102a (e.g., the receiving transducer). In some embodiments, three or more forms are used for the shape of the protrusions 206. The protrusions 206 can inhibit the coherent transfer of acoustic energy through the sidewall 114 by a combination of a variety of processes, including but not limited to, reflection, resonance, or interference.

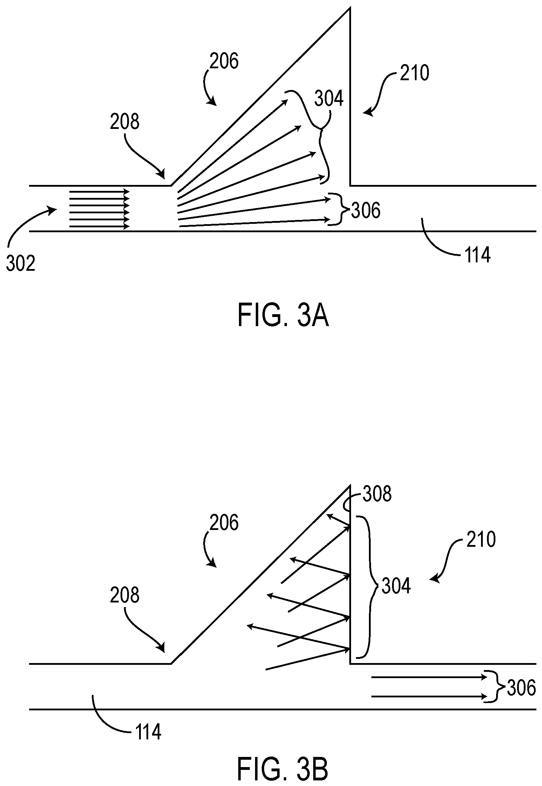

Referring to FIGS. 3A and 3B, the annular protrusions 206 (e.g., a conical shape) each include an apex 208 and a base 210, according to some embodiments. In some embodiments, the apex 208 is oriented towards one of the transducers 102. In some embodiments, if the apex 208 of the annular protrusion 206 is oriented towards the first transducer 102a, then the annular protrusion 206 is configured to mitigate noise transmission from the first transducer 102a when the first transducer 102a is the transmitting transducer. Similarly, in some embodiments, if the apex 208 of the annular protrusion 206 is oriented towards the second transducer 102b, then the annular protrusion 206 is configured to mitigate noise transmission from the second transducer 102b when the second transducer 102b is the transmitting transducer.

FIGS. 3A and 3B show an ultrasonic signal 302 (e.g., a vibration, acoustic energy) that is being transferred through the sidewall 114 (e.g., in a direction from left to right), according to some embodiments. As the ultrasonic signal 302 is transferred through the sidewall 114, the ultrasonic signal 302 interacts with the annular protrusion 206. A first portion 304 of the acoustic energy is transferred into the annular protrusion 206, while a second portion 306 of the acoustic energy 302 continues to travel along the sidewall 114. As shown in FIG. 3B, the interaction of the first portion 304 of the ultrasonic signal 302 with the structure may include reflection off an interior surface 308 (e.g., of the base 210), or reverberation of the structure, and thereby disrupt the coherence of the noise by the annular protrusion 206. Accordingly, the coherent ultrasonic noise is reduced as the acoustic energy 302 passes along the sidewall 114 past the annular protrusion 206. In this way, the annular protrusions 206 can effectively absorb or attenuate an amount or degree of ultrasonic noise that is transferred from the transmitting one of the transducers 102 to the receiving transducers 102 to thereby improve accuracy of flow rate measurements using the time of flight of the ultrasonic signals. As shown in FIGS. 3A and 3B, impinging energy that is transferred through the sidewall 114 may be partially reflected or cause reverberation and hence be effectively trapped within the geometric structure of the annular protrusion 206. It should be understood that in practice, ultrasonic propagation may be more complex than shown and can include surface waves and structural waves in addition to longitudinal an shear waves. Nonetheless, the geometric structure of the annular protrusion 206 can reduce both a magnitude of the energy or ultrasonic noise that propagates from one end of the conduit 204 to the other, as well as coherence of the acoustic noise. In some embodiments, a cross-sectional shape of the conduit 204 is circular. In other embodiments, the cross-sectional shape of the conduit 204 is rectangular or any other shape.

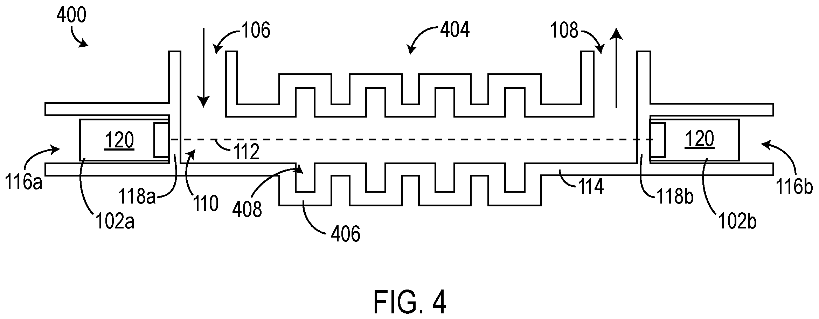

Referring to FIG. 4, the flow meter assembly 100 of FIG. 1 is shown, modified as flow meter assembly 400, is generally structurally similar to the flow meter assembly 100 or the flow meter assembly 200. As shown, a conduit 404 of the flow meter assembly 400 is similar to the conduit 104 of FIG. 1 but includes a plurality of geometric features, shown as baffles 406 (e.g., ribs, annular protrusions, annular shapes, etc.). The baffles 406 can be defined by a path of the sidewall 114 of the conduit 404. The baffles 406 each define a corresponding inner volume 408 (e.g., having an annular shape). The baffles 406 result in the sidewall 114 having a complex shape (e.g., a zig-zag) which thereby reflects and delays high frequency ultrasonic signals and also inhibits lower frequency modes such as guided waves (e.g., tube-mode vibrations) of energy propagation through the sidewall 114 and thereby reduce or mitigate the amount of acoustic noise that is transferred between the transducers 102 through the sidewall 114. In some embodiments, the shape of the sidewall 114 as shown in FIG. 4 result in geometric features both on the interior of the conduit 404 and the exterior of the conduit, thereby resulting in interspersed arrangement of external ribs and internal grooves as shown in FIG. 4. In some embodiments, the shape of the sidewall 114 as shown in FIG. 4 results in a more torturous path for energy that passes from end to end of the conduit 404 via the sidewall 114. Referring to FIGS. 2 and 4, the geometry of the baffles 406 and the annular protrusions 206 may be regularly or periodically repeated, as shown, or may alternatively be an arrangement of irregular structural features.

### Flow Meter with Geometric Improvements and Dampening

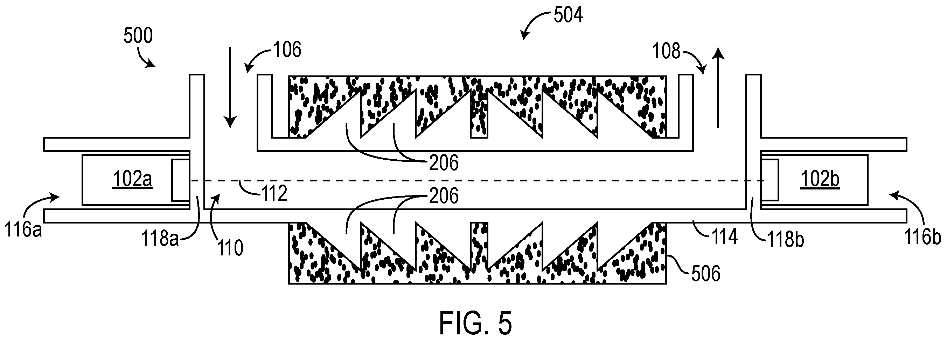

Referring to FIG. 5, the flow meter assembly 200 of FIG. 2 is shown, modified as flow meter assembly 500, is generally structurally similar to the flow meter assembly 200 or the flow meter assembly 400. The flow meter assembly 500 can be structurally similar to the flow meter assembly 200 (e.g., including the annular protrusions 206) or the flow meter assembly 400 (e.g., including the baffles 406), or other alternative arrangements where a wall of the conduit has added geometric features designed to inhibit noise propagation. In some embodiments, the flow meter assembly 500 includes a dampening member (e.g., a material) 506 that is positioned externally to a conduit 504 of the flow meter assembly 500. In some embodiments, the material 506 increases effectiveness of the noise-propagation inhibiting characteristics of the conduit 204 or the conduit 404. In some embodiments, the material 506 includes one or more different materials. In some embodiments, the material 506 is in direct contact or abuts an exterior surface of the conduit 504 so that the material 506 is configured to receive and absorb some of the energy that is propagated through the sidewall 114. In some embodiments, an acoustic impedance of the sidewall 114 is different than an acoustic impedance of the material 506. In some embodiments, the difference in the acoustic impedance of the sidewall 114 and the material 506 can be controlled. In some embodiments, sound or ultrasonic signals or vibrations that are propagated through the sidewall 114 may be transferred into the material 506 and absorbed by the material 506. In some embodiments, the material 506 may enhance the noise propagation inhibiting characteristics of the conduit 504 without changing mechanical (e.g., pressure containing) characteristics of the conduit 504.

In some embodiments, with the addition of the material 506, sound may pass from the sidewall 114 into the material 506, and be absorbed within the material 506. For example, the conduit 504 and transducer housing through which the fluid passes can be manufactured as a solid metal part with no breaks or joints, with the material 506 applied to the outside of the conduit 504. The material 506 may have beneficial sound absorbing qualities but does not need to have mechanical strength, as that is provided by the sidewall 114 and annular protrusions 206 (e.g., structures). For example, the material 506 may be a paste, according to some embodiments.

It should be understood that while FIG. 5 shows the conduit 204 modified to include the material 506, the conduit 404 may similarly be modified to include the material 506. Further, it should be understood that the ultrasonic transducers 102 may be oriented in any position relative to the flow of the fluid.

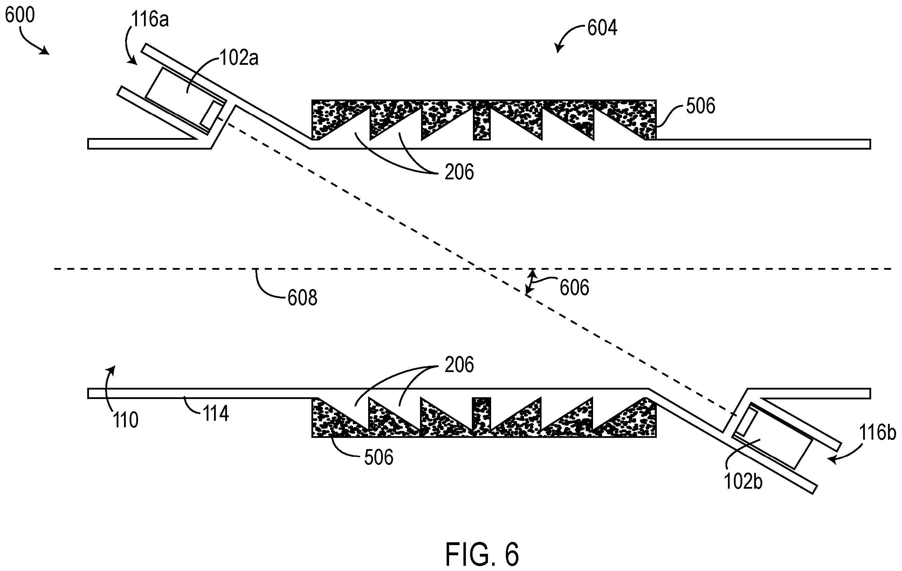

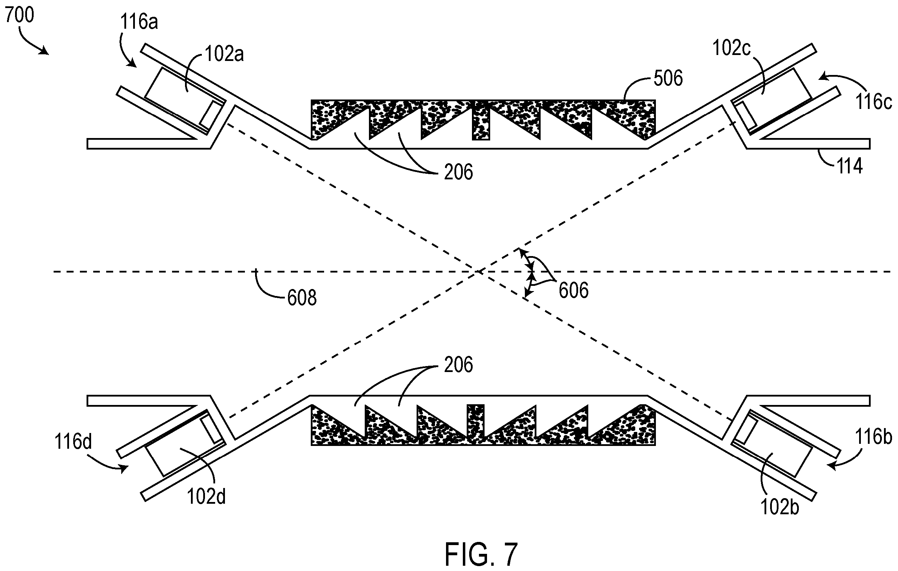

Referring to FIGS. 6 and 7, the flow meter assembly 500 is shown modified to include the ultrasonic transducers 102 positioned at an angle 606 relative to a centerline 608 of a conduit 604. The conduit 604 is the same as or similar to the conduit 504 including both the material 506 and the annular protrusions 206, but includes the ultrasonic transducers 102 positioned at an angled orientation relative to the conduit 604 (e.g., at the angle 606).

As shown in FIG. 7, another embodiment of a flow meter assembly 700 is the same as or similar to the flow meter assembly 600 as shown in FIG. 6 but includes a second set of transducers 102, shown as transducer 102c and transducer 102d. The third transducer 102c and the fourth transducer 102d can be operated similarly to the first transducer 102a and the second transducer 102b and are similarly disposed in a

third recess 116c and a fourth recess 116d, respectively. In some embodiments, the third transducer 102c and the fourth transducer 102d are similarly disposed and oriented (e.g., in a mirror orientation) as the first transducer 102a and the second transducer 102b.

Advantageously, the various embodiments of a conduit described herein can reduce an amount of acoustic energy transmission between ultrasonic transducers through sidewalls of the conduit, thereby improving accuracy of flow rate estimation. For example, the conduit shown in FIG. 2 mitigates energy transmission by having structure that traps energy or vibrations in the conduit and limits the propagation of coherent energy or vibrations. The conduit shown in FIG. 4 provides a sidewall with a complex structure so that acoustic energy transmission through the sidewalls is mitigated. The conduit shown in FIGS. 5-7 includes both the structure of the embodiment shown in FIG. 2 and also includes an absorbing material to aid in mitigating energy or vibration transfer through the conduit (e.g., the walls of the conduit). The material 506 may inhibit noise propagation through sidewalls of the conduit, thereby improving accuracy of flow rate estimation by reducing measurement noise at the transducers. Any of the conduits or flow meters described herein or the techniques for improving the accuracy of flow rate estimation can be applied to a liquid or gas flow measurement system, including but not limited to hydrocarbon gas, hydrocarbon liquid and oil and gas production chemicals, etc.

In some embodiments, energy transmission (e.g., acoustic or vibrational energy transmission) between the transducers 102 through sidewall of the conduit can also be mitigated, reduced, or inhibited by isolating the transducers 102 from the sidewall of the conduit. However, in most practical circumstances, energy may still be transmitted to and from the transducers to the sidewalls due to the fac that, in some embodiments, seals are positioned between the transducers 102 and the sidewall of the conduit. Mitigating the amount of noise in a measurement of an ultrasonic transducer can improve accuracy of the estimation (e.g., by a controller) of a flow rate particularly at low velocities or low flow rates (e.g., when a difference in transit time is relatively small) and when signals are relatively weak due to either high attenuation or acoustic impedance mismatch between the transducers and the fluid. It should be understood that any of the techniques, conduits, or flow meter arrangements as described herein can be applied to gas or liquid applications.

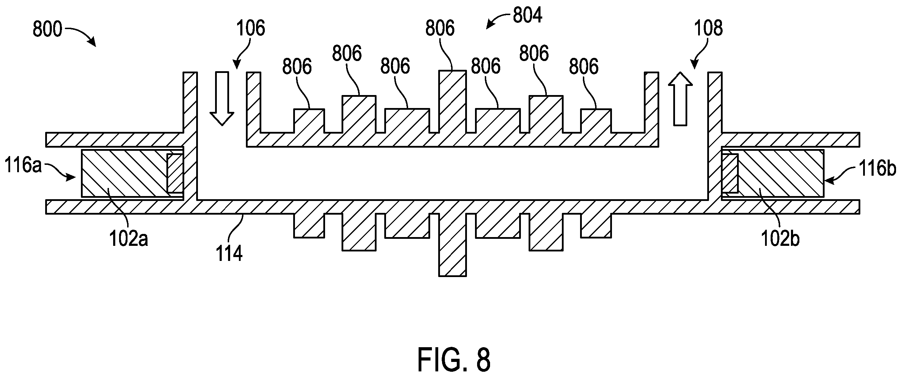

Referring to FIG. 8, the protrusions 206 can be provided as protrusions 806 (e.g., geometric structures) having square or rectangular cross-sectional shapes. The protrusions 806 have varying radial lengths and are provided as discrete portions along the sidewall 114. The protrusions 806 can be evenly spaced along the sidewall 114. The protrusions 806 can have the form of irregular sized ribs disposed along the sidewall 114 to inhibit the coherent transfer of acoustic energy.

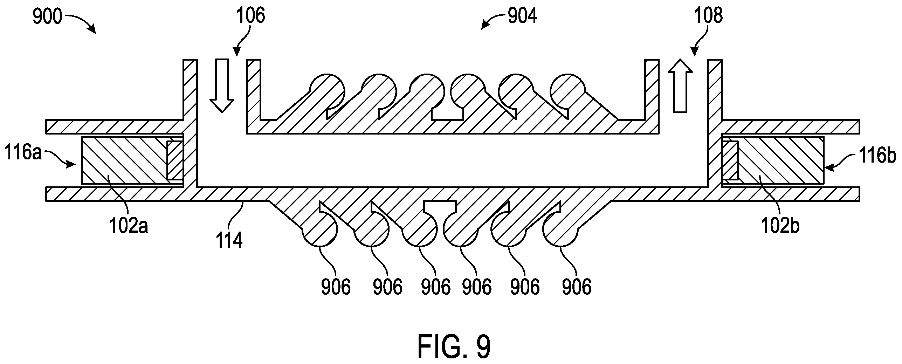

Referring to FIG. 9, the protrusions 206 can be provided as protrusions 906 (e.g., more complex geometric structures). The protrusions 906 are disposed on the sidewall 114 and can be evenly spaced along the sidewall 114. The protrusions 906 have the form of a combination of angular ribs and toroids, and may generally have a complex geometric form. The protrusions 906 can include a first group of protrusions 906 having a first orientation and a second group of protrusions 906 having a second orientation. For example, the first group and the second group can be mirrors of each other about a position along the sidewall 114. In some embodiments, the protrusions 906 have a combination of angular ribs and toroids.

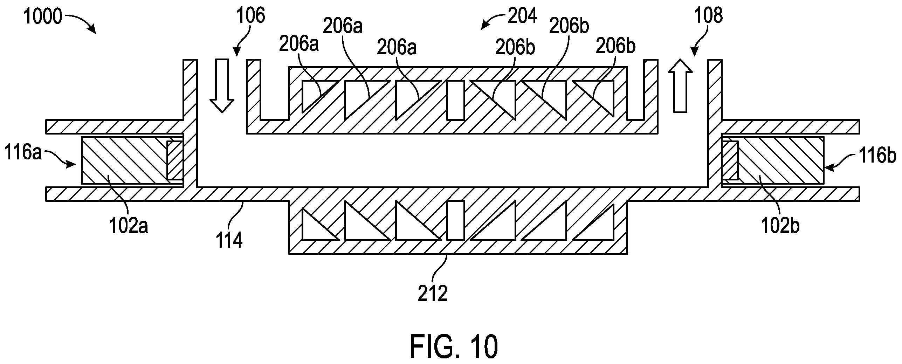

Referring to FIG. 10, the protrusions 206 can be provided within an enclosure 212. Providing the protrusions 206 within a structural enclosure 212 can provide various voids between the protrusions 206 and the structural enclosure 212. The voids may aid the protrusions 206 in inhibiting the propagation of coherent acoustic energy. The voids may function as geometric structures similar to the protrusions 206. In some embodiments, the protrusions 206 and the enclosure 212 are manufactured by additive manufacturing to provide complex geometric structures with voids.

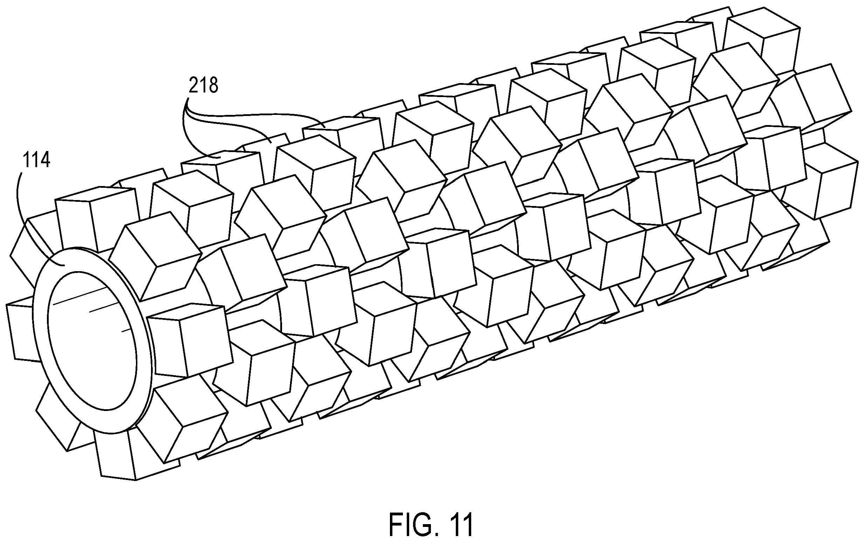

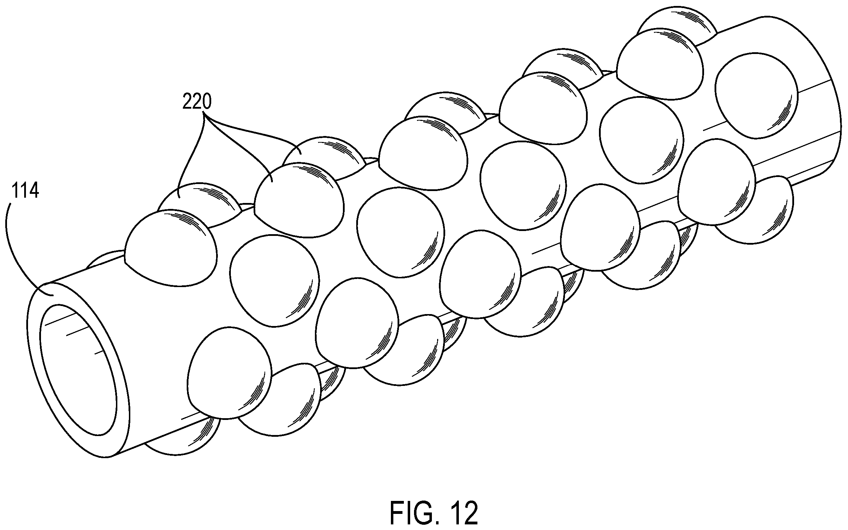

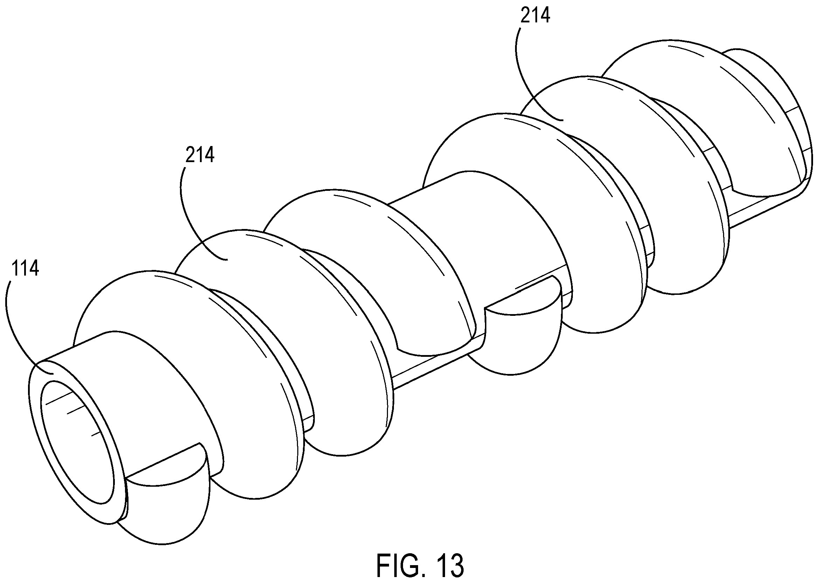

Referring to FIGS. 11-13, the protrusions 206 can be provided as any of, or any combination of spiral structures 214, discrete cuboid structures 218 (e.g., intents, protrusions, etc.), or discrete rounded structures 220. The spiral structures 214 may be continuous or discrete structures that have discontinuous radial symmetry about the sidewall 214. The cuboid structures 218 or the discrete rounded structures 220 can be discontinuous annular protrusions disposed about the sidewall 214 or indents. The discrete cuboid structures 218 or the discrete rounded structures 220 can be provided as recesses or may be provided as protrusions that are disposed about the outer surface of the sidewall 214. It should be understood that the protrusions 206 can include various geometric structures including various types of geometric structures disposed on the sidewall 214. The cuboid structures 218 or the rounded structures 220 can have a variety of geometric shapes such as cuboid projections, pyramidal projections, recesses, button projections, etc.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the figures. It should be noted that the orientation of various elements may differ according to other exemplary embodiments, and that such variations are intended to be encompassed by the present disclosure.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the flow meter 100 and the systems and components thereof as shown in the various exemplary embodiments is illustrative only. Additionally, any element disclosed in one embodiment may be incorporated or utilized with any other embodiment disclosed herein.

## Claims

1. A flow meter **characterized by**:
a conduit comprising a sidewall, an inner volume through which a fluid flows defined by the sidewall, and a plurality of recesses or ports; and
a plurality of ultrasonic transducers, each positioned in a corresponding one of the plurality of recesses or ports;
wherein the sidewall defines a plurality of geometric structures, the plurality of geometric structures configured to mitigate a coherent transfer of acoustic energy through the sidewall.

2. The flow meter of Claim 1, further **characterized by** a controller configured to receive signals from the plurality of ultrasonic transducers and estimate a flow rate of the fluid.

3. The flow meter of Claim 1 or 2, further **characterized in that** the plurality of geometric structures are configured to inhibit the coherent transfer of acoustic energy through the sidewall by a combination of at least one or more of reflection, resonance, or interference.

4. The flow meter of Claim 1, 2, or 3, further **characterized in that** the plurality of geometric structures each comprise at least one of a protrusion or a void, wherein the protrusion comprises an apex and a base, wherein the plurality of geometric structures are configured to receive at least a portion of the energy that is transferred through the sidewall and transfer the energy to the plurality of geometric structures to mitigate the coherent transfer of acoustic energy through the sidewall and reduce an amount of noise received at the plurality of ultrasonic transducers.

5. The flow meter of Claim 1, 2, 3, or 4 further **characterized by** a dampening material positioned about an exterior surface of the plurality of geometric structures and the sidewall of the conduit, the dampening material configured to absorb energy transferred through the sidewall and reduce an amount of noise received at the plurality of ultrasonic transducers.

6. The flow meter of Claim 1, 2, 3, or 4 further **characterized in that** the plurality of geometric structures protrude outwards from an outer surface of the sidewall.

7. The flow meter of Claim 1, 2, 3, 4, 5, or 6 further **characterized in that** the plurality of geometric structures are positioned along the conduit between a first of the plurality of ultrasonic transducers and a second of the plurality of ultrasonic transducers.

8. A flow meter comprising a conduit comprising an inner volume through which a fluid flows defined, and a plurality of recesses or ports, and a plurality of ultrasonic transducers, each positioned in a corresponding one of the plurality of recesses or ports, the flow meter **characterized by**:
a sidewall defining the inner volume, wherein the sidewall defines a plurality of geometric structures comprising an apex and a base, the plurality of geometric structures configured to mitigate a transfer of energy through the sidewall to the plurality of ultrasonic transducers to improve a signal to noise ratio of the plurality of ultrasonic transducers.

9. The flow meter of Claim 8, further **characterized by** a controller configured to receive signals from the plurality of ultrasonic transducers and estimate a flow rate of the fluid.

10. The flow meter of Claim 8 or 9, further **characterized in that** the plurality of geometric structures are configured to inhibit coherent transfer of acoustic energy through the sidewall by a combination of at least one or more of reflection, resonance, or interference.

11. The flow meter of Claim 8, 9, or 10 further **characterized in that** the plurality of geometric structures are configured to receive at least a portion of the energy that is transferred through the sidewall and transfer the energy to the plurality of geometric structures to mitigate the transfer of energy through the sidewall and reduce an amount of noise received at the plurality of ultrasonic transducers.

12. The flow meter of Claim 8, 9, 10 or 11 further **characterized by** a dampening material positioned about an exterior surface of the sidewall of the conduit, the dampening material configured to absorb energy transferred through the sidewall and reduce an amount of noise received at the plurality of ultrasonic transducers.

13. The flow meter of Claim 8, 9, 10, 11, or 12 further **characterized in that** the plurality of geometric structures protrude outwards from an outer surface of the sidewall.

14. The flow meter of Claim 8, 9, 10, 12, 12 or 13 further **characterized in that** the plurality of geometric structures are positioned along the conduit between a first of the plurality of ultrasonic transducers and a second of the plurality of ultrasonic transducers.

15. A flow meter **characterized by**:
a conduit comprising a sidewall and an inner volume through which a fluid flows defined by the sidewall; and
an ultrasonic transducer positioned along the conduit, the ultrasonic transducer configured to measure a rate of a flow of the fluid through the conduit;
wherein the sidewall defines a plurality of geometric structures comprising an apex and a base, the plurality of geometric structures configured to mitigate a transfer of acoustic energy through the sidewall to the ultrasonic transducer to improve a signal to noise ratio of the ultrasonic transducer.

16. The flow meter of Claim 15, further **characterized by** a controller configured to receive signals from the ultrasonic transducer and estimate a flow rate of the fluid.

17. The flow meter of Claim 15 or 16, further **characterized by** the plurality of geometric structures increase a length of a path between the ultrasonic transducer through the sidewall to mitigate the transfer of energy through the sidewall and reduce an amount of noise received at the ultrasonic transducer.

18. The flow meter of Claim 15, 16, or 17, further **characterized in that** the plurality of geometric structures are configured to receive at least a portion of the energy that is transferred through the sidewall and transfer the energy to the base to mitigate the transfer of energy through the sidewall and reduce an amount of noise received at the ultrasonic transducer.

19. The flow meter of Claim 15, 16, 17, or 18 further **characterized by** a dampening material positioned about an exterior surface of the sidewall of the conduit, the dampening material configured to absorb energy transferred through the sidewall and reduce an amount of noise received at the ultrasonic transducer.

20. The flow meter of Claim 15, further **characterized in that** the plurality of geometric structures are positioned along a portion of the conduit across which an ultrasonic signal transmitted by the ultrasonic transducer is transferred.
